(19) Europäisches Patentamt
European Patent Office
Office européen des brevets

(11) **EP 3 607 446 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **18714423.3**

(22) Anmeldetag: **13.03.2018**

(51) Internationale Patentklassifikation (IPC):
**G06F 11/10** *(2006.01)*      **H04L 9/08** *(2006.01)*

(52) Gemeinsame Patentklassifikation (CPC):
**G06F 11/1004; H04L 9/0855**

(86) Internationale Anmeldenummer:
**PCT/AT2018/060063**

(87) Internationale Veröffentlichungsnummer:
**WO 2018/184054 (11.10.2018 Gazette 2018/41)**

(54) **VERFAHREN ZUR ERSTELLUNG UND VERTEILUNG VON KRYPTOGRAPHISCHEN SCHLÜSSELN**

METHOD FOR CREATING AND DISTRIBUTING CRYPTOGRAPHIC KEYS

PROCÉDÉ SERVANT À CRÉER ET À DISTRIBUER DES CLÉS CRYPTOGRAPHIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2017 AT 502802017**

(43) Veröffentlichungstag der Anmeldung:
**12.02.2020 Patentblatt 2020/07**

(73) Patentinhaber: **AIT Austrian Institute of Technology GmbH**
**1210 Wien (AT)**

(72) Erfinder:
• **KRENN, Stephan**
**2362 Biedermannsdorf (AT)**
• **LORÜNSER, Thomas**
**1100 Wien (AT)**
• **SCHRENK, Bernhard**
**2122 Ulrichskirchen (AT)**
• **PACHER, Christoph**
**Wien 1200 (AT)**

(74) Vertreter: **Wildhack & Jellinek Patentanwälte OG**
**Landstraßer Hauptstraße 50**
**1030 Wien (AT)**

(56) Entgegenhaltungen:
**US-A1- 2015 036 824      US-B2- 9 294 272**

## Beschreibung

Die Erfindung betrifft ein Fehlerkorrektur-Verfahren zur Erstellung und Verteilung eines Schlüssels für zwei Endgeräte zur Verwendung als Kryptografieschlüssel im Rahmen eines symmetrischen Kryptographieverfahrens..

Aus dem Stand der Technik ist es bekannt, zwischen zwei Endgeräten einen kryptographischen Schlüssel mittels Quantenkommunikation zu erzeugen. Die Übertragung des Schlüssels über einen Quantenkommunikationskanal oder einen anderen stark fehlerbehafteten Kanal bewirkt, dass in den beiden Endgeräten in den betreffenden Endgeräten voneinander verschiedene Schlüssel enthalten sind. US 9294272 B2 offenbart ein Verfahren zur Quantumschlüsselverteilung gemäss dem quantum key distribution (QKD) Protokoll. Das OKD-Protokoll zielt darauf ab, einen Schlüssel zwischen zwei legitimen und entfernten Benutzern, dem ersten Benutzer A und dem zweiten Benutzer B, in Gegenwart eines Lauschers E herzustellen. E ist ein nicht legitimer Benutzer, der absichtlich Informationen in Bezug auf den geheimen Schlüssel stören oder abfangen kann. Der Schlüssel soll geheim, sicher und zufällig sein.

US 9294272 B2 offenbart folgende Merkmale des unabhängigen Anspruchs 1: Verfahren zur Erstellung, Verteilung und Korrektur von kryptographischen Schlüsseln, insbesondere zum Schutz der Kommunikation auf zwei Endgeräten (A, B), wobei über einen fehlerbehafteten ersten Kommunikationskanal (Q), insbesondere über einen Quantenkommunikationskanal, Signale zur Erstellung korrelierter Werte in den beiden Endgeräten (A, B) verteilt werden, und diese korrelierten Werte derart als Schlüssel in den beiden Endgeräten vorliegen. Aus dem Stand der Technik ist es auch bekannt, einen der beiden oder beide Schlüssel derart zu korrigieren, dass die beiden Schlüssel gleich sind und diese beiden Schlüssel im Rahmen eines symmetrischen Kryptographieverfahrens bei der Kommunikation zwischen den beiden Endgeräten verwendet werden können. Um diese Korrektur vorzunehmen, wird typischerweise in einem der beiden Endgeräte, basierend auf einem Schlüssel und einer öffentlich bekannten Prüfmatrix, eine Prüfsumme gebildet und diese an das andere Endgerät übermittelt. Dabei sind Verfahren bekannt, mit denen der Schlüssel des zweiten Endgeräts derart abgeändert wird, dass die Prüfsumme derjenigen Prüfsumme entspricht, die sich als Produkt der Prüfmatrix und des ersten Schlüssels ergibt. Solche Verfahren sind beispielsweise aus Todd K. Moon: Error Correction Coding. Mathematical Methods and Algorithms. Wiley-Interscience, Hoboken NJ, 2005, ISBN 0-471-64800-0 bekannt. Wesentlicher Nachteil dieser Vorgehensweise ist, dass die Korrektur des Schlüssels äußerst rechenaufwändig ist und nach erstmaliger Übertragung des Schlüssels zu einer hohen Ressourcenbelastung des den Schlüssel korrigierenden Endgeräts führt.

Aus dem Stand der Technik ebenfalls bekannte Maßnahmen zur externen Berechnung von Daten, beispielsweise die Durchführung des zur Korrektur des Schlüssels erforderlichen Algorithmus in einem Rechenzentrum, hat jedoch das wesentliche Problem, dass der notwendigerweise geheime Schlüssel das Endgerät verlässt und an ein nicht notwendigerweise zuverlässiges Rechenzentrum übertragen werden muss.

Aufgabe der Erfindung ist es, ein Schlüsselkorrekturverfahren zu schaffen, das auf einem Rechner ausführbar ist, der über größere Rechenkapazität verfügt und der geringeren Anforderungen hinsichtlich der Vertraulichkeit zu genügen braucht.

Die Erfindung löst diese Aufgabe mit den Merkmalen des Patentanspruchs 1.

Erfindungsgemäß ist vorgesehen, dass

a) über einen fehlerbehafteten ersten Kommunikationskanal, insbesondere über einen Quantenkommunikationskanal, Signale zur Erstellung korrelierter Werte in den beiden Endgeräten verteilt werden, und diese korrelierten Werte derart als Schlüssel in den beiden Endgeräten vorliegen,

b) basierend auf dem im ersten Endgerät vorliegenden ersten Schlüssel eine Prüfsumme gebildet wird und diese Prüfsumme über einen vom ersten Kommunikationskanal verschiedenen zweiten Kommunikationskanal an das zweite Endgerät übertragen wird,

c) basierend auf dem im zweiten Endgerät vorliegenden zweiten Schlüssel eine zweite Prüfsumme gebildet wird und die beiden Prüfsummen oder die Differenz der beiden Prüfsummen oder daraus abgeleitete Informationen über den zweiten Kommunikationskanal an einen von den beiden Endgeräten verschiedenen und von diesem räumlich getrennten Server übertragen wird,

d) dass der Server basierend auf den beiden Prüfsummen oder der Differenz der beiden Prüfsummen oder den daraus abgeleiteten Informationen einen Korrekturwert ermittelt, der bei Anwendung auf einen oder beide Schlüssel die Schlüssel zur Übereinstimmung bringt, und

e) dass der Korrekturwert an eines oder beide Endgeräte über den zweiten Kommunikationskanal übertragen wird und auf einen oder beide Schlüssel angewendet wird.

Ein wesentlicher Vorteil des erfindungsgemäßen Vorgehens liegt darin, dass der für die Bildung des Korrekturwerts verwendete Server beliebigen anderen Personen offen stehen kann und keine konkrete Sicherheitsfreigabe für den Server erforderlich ist.

Darüber braucht der für die Kommunikation zwischen dem Server und den Erdgeräten verwendete Kommunikationskanal nicht abhörsicher zu sein.

Eine besonders einfache, initiale Verteilung der Schlüssel auf die beiden Endgeräte sieht vor, dass die Signale zur Erstellung korrelierter Werte in den beiden Endgeräten verteilt werden, indem

- vom ersten Endgerät ein zufälliges Signal erstellt wird und, insbesondere mittels Quantenkommunikation, an das zweite Endgerät übertragen wird, oder
- vom zweiten Endgerät ein zufälliges Signal erstellt wird und, insbesondere mittels Quantenkommunikation, an das erste Endgerät übertragen wird, oder
- von einer externen Signalquelle ein verschränkter Quantenzustand erzeugt und mittels Quantenkommunikation an beide Endgeräte übertragen werden.

Eine weitere Verbesserung der Sicherheit kann erreicht werden, indem zu Bildung der korrelierten Werte Teile des übertragenen Signals ausgewählt werden und die übrigen Teile des übertragenen Signals verworfen werden.

Ein besonders effizientes Vorgehen, das eine einfache Korrektur der Schlüssel aufgrund einer linearen Vorgehensweise ermöglicht, sieht vor,

- dass ein Schlüssel als Binärvektor einer vorgegebenen Länge angegeben wird,
- dass eine öffentlich bekannte Prüfmatrix umfassend Binärzahlen als Einträge vorgegeben wird, deren Zeilenzahl der Länge der Schlüssel und deren Spaltenzahl der Länge der Prüfsummen entspricht und
- dass die Prüfsummen durch Bildung einer Matrix-Vektor-Multiplikation gebildet wird, wobei als Addition von Bits die XOR-Operation und als Multiplikation von Bits die AND-Operation verwendet wird.

Ebenso kann zu diesem Zweck vorgesehen sein,

- dass ein Schlüssel als Vektor einer vorgegebenen Länge angegeben wird, dessen Elemente aus einem Galois-Körper stammen,
- dass eine öffentlich bekannte Prüfmatrix umfassend Elemente aus einem Galois-Körper als Einträge vorgegeben wird, deren Zeilenzahl der Länge der Schlüssel und deren Spaltenzahl der Länge der Prüfsummen entspricht und
- dass die Prüfsummen durch Bildung einer Matrix-Vektor-Multiplikation gebildet wird, wobei als Addition und Multiplikation die betreffenden Operationen des Elemente aus einem Galois-Körper verwendet werden.

Um die Übertragungssicherheit zu erhöhen, insbesondere um auszuschließen, dass Angreifer genug Information über den Schlüssel durch jegliches Mithören im Rahmen des Schlüsselaustauschs oder des Schlüsselabgleichs erlangen, kann vorgesehen sein, dass die Länge der Schlüssel auf vorab vorgegebene Weise um eine Anzahl von Bits reduziert wird, die zumindest der Anzahl der Bits der Prüfsumme entspricht.

Nach Austausch der Schlüssel ist eine abhörsichere Datenübertragung möglich, wobei zwischen den beiden Endgeräten Nachrichten ausgetauscht werden, die mittels eines symmetrischen Kryptographieverfahrens jeweils unter Verwendung des in den Endgeräten abgespeicherten Schlüssels geschützt wurden.

Nach Austausch der Schlüssel ist es möglich die Authentizität übermittelter Nachrichten zu prüfen, indem zwischen den Endgeräten Nachrichten ausgetauscht werden, wobei jeder der Nachrichten jeweils ein Hash-Wert angehängt wird, die sich auf vorgegebene Weise aus dem Schlüssel und aus der in der Nachricht zu übertragenden Information ergibt,
wobei das jeweils empfangende Endgerät beim Erhalt überprüft, ob sich der übermittelte Hash-Wert auf vorgegebene Weise aus dem Schlüssel und aus der in der Nachricht zu übertragenden Information ergibt und in diesem Fall die Authentizität der Nachricht festgestellt wird.

Eine bevorzugte Ausführungsform der Erfindung wird anhand der Zeichnungsfigur näher dargestellt.

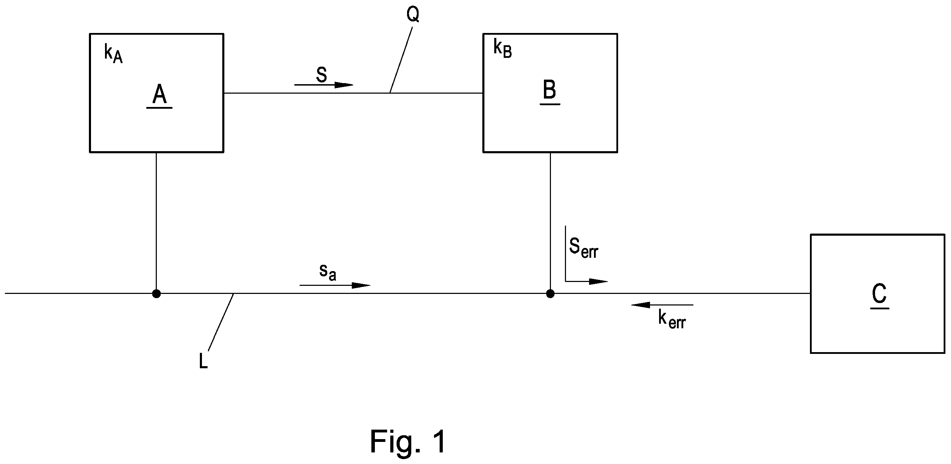

In Fig. 1 sind die Endgeräte A, B zweier Kommunikationsteilnehmer dargestellt, die über einen potentiell unsicheren zweiten Kommunikationskanal L sowie über einen ersten Kommunikationskanal Q, insbesondere über einen Quantenkommunikationskanal, miteinander verbunden sind. Im vorliegenden Ausführungsbeispiel der Erfindung verfügt das Endgerät A über eine Sendeeinrichtung, mit der über den ersten Kommunikationskanal Q Signale an das Endgerät B übertragen werden können. Das Endgerät B verfügt über eine Empfangseinrichtung, mit der Signale über den ersten Kommunikationskanal Q vom Endgerät A ausgehende Signale empfangen werden können.

Als über den ersten Kommunikationskanal Q zu übertragende Signale werden typischerweise Quantensignale verwendet, die lediglich durch eine sehr geringe Anzahl von Photonen repräsentiert sind. Im Rahmen der Quantenkommunikation ist es auf diese Weise möglich, Angreifer zu detektieren, da im Falle des Auslesens einzelner Signale über den ersten Kommunikationskanal Q Störungen auf dem Kanal bewirkt werden, sodass das Signal beim empfangenden Endgerät B überhaupt nicht oder nur mit Störungen ankommt. Es können jedoch auch alternativ andere Signale über einen Kommunikationskanal Q übertragen werden, bei denen der Angreifer auch nicht in der Lage ist das vollständige Signal zu kopieren

Als Signal wird vorteilhafterweise vom ersten Endgerät A ein zufälliges Datensignal über den ersten Kommunikationskanal Q übermittelt. Dieses Datensignal wird darüber hinaus als Schlüssel $k_A$ abgespeichert. Das zweite Endgerät B speichert das über den ersten Kommunikationskanal Q empfangene Datensignal als Schlüssel $k_B$ ab.

Darüber hinaus kann bei der Verteilung des Schlüssels vorgesehen sein, dass das Signal erzeugende Endgerät A die einzelnen, das Signal erzeugenden Photonen mit einer ständig wechselnden Polarisation aussendet. Dabei kann das Endgerät B seinen Empfänger ebenfalls auf unterschiedliche Polarisation einstellen, wobei die Polarisation der ausgesendeten Photonen mit der Polarisation des Empfangsgeräts im zweiten Endgerät B nicht abgestimmt sind. Erst nah der Übertragung des Signals stimmen die beiden Endgeräte A, B in einem Abgleichschritt diejenigen Signalanteile untereinander ab, bei der die Polarisation der vom ersten Endgerät A ausgesandten Photonen der Polarisation des Empfangsgeräts des zweiten Endgeräts B entspricht. Die übrigen Signalanteile, bei denen die Polarisation des vom Endgerät A ausgesandten Signalanteils mit der Polarisation des Empfangsgeräts des zweiten Endgeräts B nicht übereinstimmt, werden verworfen. Werden in beiden Endgeräten A, B zwei Polarisationsrichtungen vorgegeben, reduziert sich der Informationsgehalt des für die Bildung des Schlüssels zur Verfügung stehenden Signals um die Hälfte.

Um einen Abgleich durchzuführen, tauschen die beiden Endgeräte nach der Übertragung des Schlüssels die jeweils verwendete Polarisationsrichtung untereinander aus und können damit für den jeweils bei ihnen vorliegenden Signalanteil bzw. Schlüssel feststellen, welche der Bits mit aufeinander abgestimmten Sende- und Empfangseinrichtungen gesendet wurden. Die übrigen Bits des jeweiligen Schlüssels werden verworfen. Die jeweils verwendeten Polarisationen werden erst ausgetauscht, nachdem das Signal vom ersten Endgerät A an das zweite Endgerät B über den ersten Kommunikationskanal Q übertragen wurde. Von besonderem Vorteil ist es dabei, dass der Austausch der jeweils für das Senden und Empfangen verwendeten Polarisationsrichtungen einem Angreifer keinerlei Information über den ausgetauschten Schlüssel gibt.

Nach diesem initialen Schritt des Schlüsselabgleichs liegt nunmehr jeweils ein Schlüssel $k_A$, $k_B$ in jedem der beiden Endgeräte A, B vor. Aufgrund von nicht perfekten Übertragungseigenschaften des Kanals und dem möglichen Einfluss von Angreifern sind die Schlüssel $k_A$, $k_B$ nicht identisch.

In einem ersten Schritt erstellt nun eines der beiden Endgeräte, im vorliegenden Fall das erste Endgerät A, basierend auf dem bei ihm vorliegenden Schlüssel $k_A$ eine Prüfsumme $s_A$. Die Bildung dieser Prüfsumme kann auf unterschiedliche Weise erfolgen, wobei im vorliegenden Ausführungsbeispiel eine Variante gewählt wird, die zu einer numerisch besonders einfachen Behandlung führt. Dabei wird der Schlüssel $k_A$ als Bit-Vektor, umfassend eine Vielzahl von einzelnen Bits, angesehen. Darüber hinaus wird eine öffentlich bekannte Prüfmatrix P einer vorgegebenen Größe zwischen den beiden Endgeräten A, B vereinbart, die auch beliebigen Angreifern bekannt sein kann.

Die im Rahmen der Prüfsummenbildung verwendete Prüfmatrix P weist eine Anzahl von Zeilen auf, die mit der Anzahl der Elemente im Zeilen-Vektor des Schlüssels $k_A$ übereinstimmt. Die Prüfmatrix P weist eine Anzahl von Spalten auf, die mit der Anzahl der gewünschten Einträge im Spalten-Vektor der Prüfsumme $s_A$

übereinstimmt. Die konkrete Bildung von Prüfmatrizen ist vorteilhaft in Information Theory, Inference, and Learning Algorithms, by David J.C. MacKay, discusses LDPC codes in Chapter 47 näher dargestellt.

Für die Bildung eines Prüfsummen-Vektors $s_A$ wird eine Matrix-Vektor-Multiplikation zwischen der Prüfmatrix P und dem, hier als Zeilen-Vektor dargestellten, Schlüssel-Vektor $k_A$ durchgeführt, woraufhin man einen Zeilen-Prüfsummenvektor $s_A$ erhält. Im vorliegenden Ausführungsbeispiel wird zur einfachen Darstellung ein binärer Vektor für den Schlüssel $k_A$, eine mit Binärzahlen gefüllte Prüfmatrix P und ein mit Binärzahlen gefüllter Spalten-Vektor als Prüfsumme $s_A$ verwendet. Wird im Rahmen der Vektor-Matrix-Multiplikation eine Multiplikation zwischen einzelnen Binärzahlen benötigt, so verwendet man hierfür die AND-Operation. Wird im Rahmen der Matrix-Vektor-Multiplikation eine Addition benötigt, werden die einzelnen, zu addierenden Werte der XOR-Operation unterzogen. Ein derart mit den Operationen AND und XOR als Multiplikation und Addition versehene Struktur mit den Werten 0 und 1 bildet einen Körper und wird in der Mathematik auch als Galois-Körper GF2 bezeichnet.

Anstelle des hier verwendeten Galois-Körpers GF2 können auch andere lineare Strukturen, insbesondere andere Galois-Körpers als Elemente der Schlüssel, der Prüfsummen oder der Prüfmatrix verwendet werden. Diese Strukturen weisen, wie auch GF2, die Eigenschaften eines Körpers auf, bieten insbesondere auch die Möglichkeit der Addition und Multiplikation.

Als Ergebnis dieser Matrix-Vektor-Multiplikation erhält man eine Prüfsumme $s_A$, die im Folgenden ihrerseits als Zeilenvektor behandelt wird.

Das erste Endgerät A übermittelt die so übermittelte erste Prüfsumme $s_A$ über den weiteren Kommunikationskanal L an das zweite Endgerät B. Das zweite Endgerät B bildet nun seinerseits, basierend auf dem bei ihm vorliegenden Schlüssel $k_B$, auf dieselbe Weise wie das erste Endgerät A eine Prüfsumme $s_B$. Anschließend bildet das zweite Endgerät B die Differenz $s_{err}$ als Differenz zwischen den beiden Prüfsummen $s_A$ und $s_B$.

$$s_{err} = s_A - s_B = (k_A - k_B) \cdot P = k_{err} \cdot P$$

Anstelle der Bildung der unmittelbaren Differenz zwischen den beiden Prüfsummen kann auch eine andere Funktion verwendet werden, die linear von den Prüfsummen sowie von den beiden Schlüsseln abhängt und einen vorgegebenen Wert, insbesondere einen Nullvektor, liefert, wenn die beiden Schlüssel übereinstimmen.

Aus der vorstehend dargestellten Formel ergibt sich, dass die Differenz $s_{err}$ der beiden Prüfsummen $s_A$, $s_B$, insbesondere aufgrund der Linearität des verwendeten Galois-Körpers hinsichtlich seiner beiden Operationen auch als Produkt der Prüfmatrix P mit einem vektoriellen Korrekturwert $k_{err}$ dargestellt werden kann. Über-

mittelt nun das zweite Endgerät B die Differenz $s_{err}$ der beiden Prüfsummen $s_A$, $s_B$ an einen von den beiden Endgeräten A, B verschiedenen, von diesen räumlich getrennten Server C über den potentiell unsicheren Kommunikationskanal L, so kann dieser lediglich unter Kenntnis der Differenz $s_{err}$ der beiden Prüfsummen $s_A$, $s_B$ einen Korrektur-Vektor $k_{err}$ berechnen, der, wenn er zu einem der beiden Schlüssel $k_A$, $k_B$ addiert wird, den jeweils anderen Schlüssel ergibt.

Alternativ besteht auch die Möglichkeit, dass die beiden Prüfsummen $s_A$, $s_B$ voneinander unabhängig an den Server C über den zweiten Kommunikationskanal L übertragen werden und dieser Server C die Differenz der Prüfsummen $s_A$, $s_B$ bildet. Die Bildung der Differenz der beiden Prüfsummen $s_A$, $s_B$ ist numerisch mit sehr geringem Ressourcenaufwand zu erledigen, sodass es keine Rolle spielt, ob diese Operation von einem der Endgeräte A, B oder vom Server C vorgenommen wird. Die wesentliche Aufgabe des Servers C besteht darin, ausgehend von dem Differenzwert $s_{err}$ der beiden Prüfsummen $s_A$, $s_B$ einen Korrektur-Vektor $k_{err}$ zu bilden, für den gilt:

$$s_{err} = k_{err} \cdot P$$

Vereinfacht gesprochen wird nach einem Korrektur-Vektor $k_{err}$ gesucht, der, angewendet auf die gemeinsam vereinbarte Prüfmatrix P, eine Prüfsumme ergibt, die der Differenz $s_{err}$ zwischen den beiden Prüf-Vektoren $s_A$, $s_B$ entspricht. Ein solches, korrektes Verfahren ist beispielsweise in Robert G. Gallager (1963). Low Density Parity Check Codes (PDF). Monograph, M.I.T. Press. Retrieved August 7, 2013 gezeigt. Ein derartiges Verfahren ist gerade, wenn möglichst kurze Prüfsummen verwendet werden, nur mit großem Rechenaufwand zu lösen.

Nach Durchführung wird der Korrekturwert $k_{err}$ entsprechend der Vereinbarung an eines oder beide der Endgeräte A, B übertragen. Im vorliegenden Fall wird der Schlüssel $k_B$ des zweiten Endgeräts B durch Aufsummieren des Korrekturvektors $k_{err}$ derart angepasst, dass er dem Schlüssel $k_A$ des ersten Endgeräts A entspricht. Alternativ wäre es selbstverständlich auch möglich, den Korrekturwert $k_{err}$ lediglich zum Schlüssel $k_A$ des ersten Endgeräts A zu addieren, um im ersten Endgerät A einen Schlüssel $k_A$' zu erhalten, dessen Wert den Schlüssel des zweiten Endgeräts B entspricht. Da bei der Erstellung des Signals in der Regel ohnehin zufällige Signale gewählt werden, ist es nicht erforderlich, exakt denjenigen Wert zu rekonstruieren, der über den ersten Kommunikationskanal Q übermittelt wurde.

Nachdem die Schlüssel $k_A$, $k_B$ in den Endgeräten A, B zur Übereinstimmung gebracht wurden, wird im Folgenden, optionalen Schritt darauf Rücksicht genommen, dass etwaige Angreifer aufgrund der übermittelten Prüfsumme und der Informationen, die der Angreifer beim Abhören erfahren hat, einzelne Eigenschaften des verwendeten Schlüssels $k_A$, $k_B$ erfahren konnten. Wird nun die Anzahl der Bits der einzelnen Schlüssel $k_A$, $k_B$ auf möglicherweise bekannte, jedenfalls zwischen den Endgeräten A, B vorab vereinbarte Weise eine Anzahl von Bits reduziert, die zumindest der Anzahl der Bits der Prüfsumme $s_A$, $s_B$ entspricht, so gewinnt ein potentieller Angreifer möglichst wenige Informationen über den Schlüssel $k_A$, $k_B$ aus den übertragenen Prüfsummen $s_A$, $s_B$.

Hinsichtlich der Art der Erstellung des den Schlüssel enthaltenden Signals bestehen mehrere, unterschiedliche Ausführungsvarianten. Dieses Signal kann vorteilhaft ein Quantensignal sein, jedoch auch ein anderes Signal, das über einen fehlerbehafteten und speziell für einen Angreifer nicht ideal kopierbaren ersten Kommunikationskanal Q übertragen wird.

Es ist möglich, dass bei im Übrigen gleicher Vorgehensweise das zweite Endgerät B über den Kommunikationskanal Q an das erste Endgerät A ein Signal überträgt, das von diesem empfangen wird. Wiederum erhält man in beiden Endgeräten A, B voneinander abweichende Schlüssel $k_A$, $k_B$.

Daneben ist es auch möglich, dass das Signal als Quantensignal über einen den ersten Kommunikationskanal Q, der in diesem Fall als Quantenkommunikationskanal ausgebildet ist, von dritter Stelle an die beiden Endgeräte A, B übermittelt wird. Dabei werden typischerweise miteinander verschränkte Photonen über den ersten Kommunikationskanal Q übermittelt, sodass sich in den beiden Endgeräten A, B jeweils miteinander korrespondierende Signale feststellen lassen.

Ebenso ist es im Rahmen der Erfindung auch möglich, dass beide Endgeräte A, B jeweils separat eine Prüfsumme bilden und diese über den zweiten potentiell unsicheren Kommunikationskanal L an den Server C übertragen. Bei dieser Alternative bestimmt der Server jeweils die Differenz der Prüfsummen selbst.

In weiterer Folge können zwischen den beiden Endgeräten A, B Nachrichten ausgetauscht werden, die mittels eines symmetrischen Kryptographieverfahrens jeweils unter Verwendung des in den Endgeräten A, B abgespeicherten und zur Übereinstimmung gebrachten Schlüssels $k_A$, $k_B$ geschützt werden.

Insbesondere besteht auch die Möglichkeit, die Authentizität der Nachrichten durch die Bildung von schüsselabhängigen Hash-Werten zu verbessern. Dabei werden das zwischen den Endgeräten A, B Nachrichten ausgetauscht werden. Jeder der Nachrichten wird jeweils ein Hash-Wert angehängt, der sich auf vorgegebene Weise aus dem Schlüssel und aus der in der Nachricht zu übertragenden Information ergibt. Anschließend wird die Nachricht über den zweiten Kommunikationskanal L übertragen. Das jeweils empfangende Endgerät A, B überprüft beim Erhalt der Nachricht, ob sich der übermittelte Hash-Wert auf dieselbe vorgegebene Weise aus dem Schlüssel und aus der in der Nachricht zu übertragenden Information ergibt. In diesem Fall wird die Authentizität der Nachricht festgestellt und die Nachricht für echt gehalten.

**Patentansprüche**

1. Verfahren zur Erstellung, Verteilung und Korrektur von kryptographischen Schlüsseln, insbesondere zum Schutz der Kommunikation auf zwei Endgeräten (A, B),

   a) wobei über einen fehlerbehafteten ersten Kommunikationskanal (Q), insbesondere über einen Quantenkommunikationskanal, Signale zur Erstellung korrelierter Werte in den beiden Endgeräten (A, B) verteilt werden, und diese korrelierten Werte derart als Schlüssel ($k_A$, $k_B$) in den beiden Endgeräten vorliegen,
   b) basierend auf dem im ersten Endgerät (A) vorliegenden ersten Schlüssel ($k_A$) eine Prüfsumme ($s_A$) gebildet wird und diese Prüfsumme ($s_A$) über einen vom ersten Kommunikationskanal (Q) verschiedenen zweiten Kommunikationskanal (L) an das zweite Endgerät (B) übertragen wird,
   c) basierend auf dem im zweiten Endgerät (B) vorliegenden zweiten Schlüssel ($k_B$) eine zweite Prüfsumme ($s_B$) gebildet wird und die beiden Prüfsummen ($s_A$, $s_B$) oder die Differenz ($s_{err}$) der beiden Prüfsummen ($s_A$, $s_B$) oder daraus abgeleitete Informationen über den zweiten Kommunikationskanal (L) an einen von den beiden Endgeräten (A, B) verschiedenen und von diesem räumlich getrennten Server (C) übertragen wird,
   d) dass der Server (C) basierend auf den beiden Prüfsummen ($s_A$, $s_B$) oder der Differenz ($s_{err}$) der beiden Prüfsummen ($s_A$, $s_B$) oder den daraus abgeleiteten Informationen einen Korrekturwert ($k_{err}$) ermittelt, der bei Anwendung auf einen oder beide Schlüssel ($k_A$, $k_B$) die Schlüssel ($k_A$, $k_B$) zur Übereinstimmung bringt, und
   e) dass der Korrekturwert ($k_{err}$) an eines oder beide Endgeräte (A, B) über den zweiten Kommunikationskanal (L) übertragen wird und auf einen oder beide Schlüssel ($k_A$, $k_B$) angewendet wird.

2. Verfahren nach einem der vorangehenden Ansprüche, **dadurch gekennzeichnet, dass** die Signale zur Erstellung korrelierter Werte in den beiden Endgeräten (A, B) verteilt werden, indem

   - vom ersten Endgerät (A) ein zufälliges Signal erstellt wird und, insbesondere mittels Quantenkommunikation, an das zweite Endgerät (B) übertragen wird, oder
   - vom zweiten Endgerät (B) ein zufälliges Signal erstellt wird und, insbesondere mittels Quantenkommunikation, an das erste Endgerät (B) übertragen wird, oder
   - von einer externen Signalquelle ein verschränkter Quantenzustand erzeugt und mittels Quantenkommunikation an beide Endgeräte (A, B) übertragen werden.

3. Verfahren nach einem der vorangehenden Ansprüche, **dadurch gekennzeichnet, dass** zu Bildung der korrelierten Werte ($k_A$, $k_B$) Teile des übertragenen Signals (S) ausgewählt werden und die übrigen Teile des übertragenen Signals (S) verworfen werden.

4. Verfahren nach einem der vorangehenden Ansprüche, **dadurch gekennzeichnet,**

   - **dass** ein Schlüssel ($k_A$, $k_B$) als Binärvektor einer vorgegebenen Länge angegeben wird,
   - **dass** eine öffentlich bekannte Prüfmatrix (P) umfassend Binärzahlen als Einträge vorgegeben wird, deren Zeilenzahl der Länge der Schlüssel ($k_A$, $k_B$) und deren Spaltenzahl der Länge der Prüfsummen ($s_A$, $s_B$) entspricht und
   - **dass** die Prüfsummen ($s_A$, $s_B$) durch Bildung einer Matrix-Vektor-Multiplikation gebildet wird, wobei als Addition von Bits die XOR-Operation und als Multiplikation von Bits die AND-Operation verwendet wird.

5. Verfahren nach einem der vorangehenden Ansprüche, **dadurch gekennzeichnet,**

   - **dass** ein Schlüssel ($k_A$, $k_B$) als Vektor einer vorgegebenen Länge angegeben wird, dessen Elemente aus einem Galois-Körper stammen,
   - **dass** eine öffentlich bekannte Prüfmatrix (P) umfassend Elemente aus einem Galois-Körper als Einträge vorgegeben wird, deren Zeilenzahl der Länge der Schlüssel ($k_A$, $k_B$) und deren Spaltenzahl der Länge der Prüfsummen ($s_A$, $s_B$) entspricht und
   - **dass** die Prüfsummen ($s_A$, $s_B$) durch Bildung einer Matrix-Vektor-Multiplikation gebildet wird, wobei als Addition und Multiplikation die betreffenden Operationen des Elemente aus einem Galois-Körper verwendet werden.

6. Verfahren nach einem der vorangehenden Ansprüche, **dadurch gekennzeichnet, dass** die Länge der Schlüssel ($k_A$, $k_B$) auf vorab vorgegebene Weise um eine Anzahl von Bits reduziert wird, die zumindest der Anzahl der Bits der Prüfsumme ($s_A$, $s_B$) entspricht.

7. Verfahren nach einem der vorangehenden Ansprüche, wobei zwischen den beiden Endgeräten (A, B) Nachrichten ausgetauscht werden, die mittels eines symmetrischen Kryptographieverfahrens jeweils unter Verwendung des in den Endgeräten (A, B) abgespeicherten Schlüssels ($k_A$, $k_B$) geschützt wurden.

8. Verfahren nach einem der vorangehenden Ansprüche, wobei zwischen den Endgeräten (A, B) Nachrichten ausgetauscht werden, wobei jeder der Nachrichten jeweils ein Hash-Wert angehängt wird, die sich auf vorgegebene Weise aus dem Schlüssel und aus der in der Nachricht zu übertragenden Information ergibt,

wobei das jeweils empfangende Endgerät (A, B) beim Erhalt überprüft, ob sich der übermittelte Hash-Wert auf vorgegebene Weise aus dem Schlüssel und aus der in der Nachricht zu übertragenden Information ergibt und in diesem Fall die Authentizität der Nachricht festgestellt wird.

**Claims**

1. A method for generating, distributing and correcting cryptographic keys, in particular for protecting communications on two terminals (A, B),

   a) wherein signals for generating correlated values are distributed in the two terminals (A, B) via an erroneous first communication channel (Q), in particular via a quantum communication channel, and these correlated values are present as keys ($k_A$, $k_B$) in the two terminals in this way,

   b) based on the first key ($k_A$) present in the first terminal (A), a checksum ($s_A$) is formed and this checksum ($s_A$) is transmitted to the second terminal (B) via a second communication channel (L) different from the first communication channel (Q),

   c) based on the second key ($k_B$) present in the second terminal (B), a second checksum ($s_B$) is formed and the two checksums ($s_A$, $s_B$) or the difference ($s_{err}$) of the two checksums ($s_A$, $s_B$) or information derived therefrom is transmitted via the second communication channel (L) to a server (C) which is different from the two terminals (A, B) and spatially separated therefrom,

   d) in that the server (C) determines, based on the two checksums ($s_A$, $s_B$) or the difference ($s_{err}$) of the two checksums ($s_A$, $s_B$) or the information derived therefrom, a correction value ($k_{err}$) which, when applied to one or both keys ($k_A$, $k_B$), brings the keys ($k_A$, $k_B$) into agreement, and

   e) that the correction value ($k_{err}$) is transmitted to one or both terminals (A, B) via the second communication channel (L) and is applied to one or both keys ($k_A$, $k_B$).

2. The method according to any one of the preceding claims, **characterized in that** the signals for generating correlated values are distributed in the two terminals (A, B) **in that**

   - a random signal is generated by the first terminal (A) and transmitted to the second terminal (B), in particular by means of quantum communication, or
   - a random signal is generated by the second terminal (B) and transmitted to the first terminal (B), in particular by means of quantum communication, or
   - an entangled quantum state is generated by an external signal source and transmitted to both terminals (A, B) by means of quantum communication.

3. The method according to any one of the preceding claims, **characterized in that** for forming the correlated values ($k_A$, $k_B$) parts of the transmitted signal (S) are selected and the remaining parts of the transmitted signal (S) are discarded.

4. The method according to any one of the preceding claims, **characterized in**

   - **that** a key ($k_A$, $k_B$) is specified as a binary vector of a predetermined length,
   - hat a publicly known check matrix (P) comprising binary numbers as entries is given, the row number of which corresponds to the length of the keys ($k_A$, $k_B$) and the column number of which corresponds to the length of the checksums ($s_A$, $s_B$), and
   - hat the checksums ($s_A$, $s_B$) are formed by forming a matrix-vector multiplication, wherein as addition of bits the XOR operation is used and as multiplication of bits the AND operation is used.

5. The method according to any one of the preceding claims, **characterized in**

   - hat a key ($k_A$, $k_B$) is specified as a vector of a predetermined length whose elements originate from a Galois body,
   - that a publicly known check matrix (P) comprising elements from a Galois body is given as entries, whose number of rows corresponds to the length of the keys ($k_A$, $k_B$) and whose number of columns corresponds to the length of the checksums ($s_A$, $s_B$), and
   - that the checksums ($s_A$, $s_B$) are formed by forming a matrix-vector multiplication wherein as addition and multiplication the respective operations of the element from a Galois body are used.

6. The method according to any one of the preceding claims, **characterized in that** the length of the keys

$(k_A, k_B)$ is reduced in a predetermined manner by a number of bits that at least corresponds to the number of bits of the checksum $(s_A, s_B)$.

7. The method according to any one of the preceding claims, wherein messages are exchanged between the two terminals (A, B) which have been protected by means of a symmetric cryptographic method, in each case using the key $(k_A, k_B)$ stored in the terminals (A, B).

8. The method according to any one of the preceding claims, wherein messages are exchanged between the terminals (A, B), wherein a hash value is appended to each of the messages in each case, which hash value is derived in a predetermined manner from the key and from the information to be transmitted in the message,

wherein the respective receiving terminal (A, B) checks upon receipt whether the transmitted hash value results in a predetermined manner from the key and from the information to be transmitted in the message, and in this case the authenticity of the message is determined.

**Revendications**

1. Procédé de création, répartition et correction de clés cryptographiques, en particulier afin de protéger la communication entre deux terminaux (A, B),

   a) dans lequel des signaux permettant de créer des valeurs corrélées sont répartis dans les deux terminaux (A, B) par l'intermédiaire d'un premier canal de communication (Q) sujet aux erreurs, en particulier par l'intermédiaire d'un canal de communication quantique, et lesdites valeurs corrélées sont présentes dans les deux terminaux sous la forme de clés $(K_A, K_B)$ de telle manière que,

   b) une somme de contrôle $(S_A)$ est formée en se basant sur la première clé $(K_A)$ présente dans le premier terminal (A) et ladite somme de contrôle $(S_A)$ est transmise au second terminal (B) par l'intermédiaire d'un second canal de communication (L) différent du premier canal de communication (Q),

   c) une seconde somme de contrôle $(S_B)$ est formée en se basant sur la seconde clé $(K_B)$ présente dans le second terminal (B), et les deux sommes de contrôle $(S_A, S_B)$ ou la différence $(S_{err})$ des deux sommes de contrôle $(S_A, S_B)$ ou les informations déduites desdites sommes est/sont transmise(s) par l'intermédiaire du second canal de communication (L) à un serveur (C) différent des deux terminaux (A, B) et séparé spatialement de ceux-ci,

   d) en se basant sur les deux sommes de contrôle $(S_A, S_B)$ ou sur la différence $(S_{err})$ des deux sommes de contrôle $(S_A, S_B)$ ou sur les informations déduites desdites sommes, le serveur (C) détermine une valeur de correction $(K_{err})$ qui fait coïncider les clés $(K_A, K_B)$ lorsqu'elle est appliquée à une ou aux deux clés $(K_A, K_B)$ et

   e) la valeur de correction $(K_{err})$ est transmise à un ou aux deux terminaux (A, B) par l'intermédiaire du second canal de communication (L) et est appliquée à une ou aux deux clés $(K_A, K_B)$.

2. Procédé selon l'une quelconque des revendications précédentes, **caractérisé en ce que** les signaux permettant de créer des valeurs corrélées sont répartis dans les deux terminaux (A, B) selon l'une des manières ci-dessous,

   - un signal aléatoire est créé par le premier terminal (A) et est transmis au second terminal (B), en particulier par l'intermédiaire d'une communication quantique, ou
   - un signal aléatoire est créé par le second terminal (B) et est transmis au premier terminal (B), en particulier par l'intermédiaire d'une communication quantique, ou
   - un état quantique intriqué est créé par une source de signal externe et est transmis aux deux terminaux (A, B) par l'intermédiaire d'une communication quantique.

3. Procédé selon l'une quelconque des revendications précédentes, **caractérisé en ce que**, afin de former des valeurs corrélées $(K_A, K_B)$, des parties du signal (S) transmis sont sélectionnées et les parties restantes du signal (S) transmis sont éliminées.

4. Procédé selon l'une quelconque des revendications précédentes, **caractérisé en ce que**

   - une clé $(K_A, K_B)$ est fournie sous forme de vecteur binaire d'une longueur prédéfinie,
   - une matrice de contrôle (P) publiquement connue est fournie, dont les entrées sont des nombres binaires, dont le nombre de lignes correspond à la longueur des clés $(K_A, K_B)$ et dont le nombre de colonnes correspond à la longueur des sommes de contrôle $(S_A, S_B)$, et
   - les sommes de contrôle $(S_A, S_B)$ sont formées par formation d'une multiplication matrice-vecteur, dans lequel l'opération OU exclusif est utilisée comme addition de bits et l'opération ET est utilisée comme multiplication de bits.

5. Procédé selon l'une quelconque des revendications précédentes, **caractérisé en ce que**

   - une clé $(K_A, K_B)$ est fournie sous forme de vecteur d'une longueur prédéfinie, dont les éléments sont issus d'un corps de Galois,

- une matrice de contrôle (P) publiquement connue est fournie, dont les entrées sont des éléments issus d'un corps de Galois, dont le nombre de lignes correspond à la longueur des clés ($K_A$, $K_B$) et dont le nombre de colonnes correspond à la longueur des sommes de contrôle ($S_A$, $S_B$), et

- les sommes de contrôle ($S_A$, $S_B$) sont formées par formation d'une multiplication matrice-vecteur, dans lequel les opérations appropriées des éléments issus d'un corps de Galois sont utilisées comme addition et multiplication.

6. Procédé selon l'une quelconque des revendications précédentes, **caractérisé en ce que** la longueur des clés ($K_A$, $K_B$) est réduite de la manière fournie ci-dessus à un nombre de bits correspondant au moins au nombre de bits de la somme de contrôle ($S_A$, $S_B$).

7. Procédé selon l'une quelconque des revendications précédentes, dans lequel des messages ayant été protégés au moyen d'un procédé cryptographique symétrique avec utilisation respective de la clé ($K_A$, $K_B$) mémorisée dans les terminaux (A, B) sont échangés entre les deux terminaux (A, B).

8. Procédé selon l'une quelconque des revendications précédentes, dans lequel des messages sont échangés entre les terminaux (A, B), dans lequel chacun des messages est associé à respectivement une valeur de hachage qui résulte de manière prédéfinie de la clé et des informations à transmettre dans le message, dans lequel le terminal (A, B) respectivement récepteur vérifie lors de l'obtention si la valeur de hachage transmise résulte de manière prédéfinie de la clé et des informations à transmettre dans le message, et dans ce cas l'authenticité du message est vérifiée.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9294272 B2

**In der Beschreibung aufgeführte Nicht-Patentliteratur**

- Moon: Error Correction Coding. **TODD K.** Mathematical Methods and Algorithms. Wiley-Interscience, 2005
- **DAVID J.C.** Information Theory, Inference, and Learning Algorithms. MacKay
- Low Density Parity Check Codes (PDF). **ROBERT G. GALLAGER.** Monograph. M.I.T. Press, 1963